Europäisches Patentamt

European Patent Office

Office européen des brevets

(11) Veröffentlichungsnummer: **0 327 818**
**A1**

(12) **EUROPÄISCHE PATENTANMELDUNG**

(21) Anmeldenummer: **89100425.1**

(22) Anmeldetag: **11.01.89**

(51) Int. Cl.⁴: **B23B 5/16**

(30) Priorität: **25.01.88 DE 8800840 U**

(43) Veröffentlichungstag der Anmeldung:
**16.08.89 Patentblatt 89/33**

(84) Benannte Vertragsstaaten:
**BE CH DE ES FR LI SE**

(71) Anmelder: **Siemens Aktiengesellschaft**
**Wittelsbacherplatz 2**
**D-8000 München 2(DE)**

(72) Erfinder: **Dettinger, Heinrich**
**Im Backes 13**
**D-6450 Hanau 8(DE)**

(54) **Fräs- und Senkvorrichtung.**

㊹ Zum Bearbeiten von zylindrischen Öffnungen, insbesondere von Rohrbodenbohrungen und Rohrenden im Kessel- und Behälterbau ist an einem Spindelkopf (1) ein Werkzeughalter (2) mit mindestens einem Schneidkörper (9) angeordnet. In einer zentralen Öffnung (4) des Spindelkopfes (1) ist ein Spanndorn (5) gelagert und durch eine zentrale Öffnung des Werkzeughalters (2) geführt. Um das Justieren der Schneidkörper für unterschiedliche Senkformen nach dem jedesmaligen Einsetzen zu vermeiden, ist im Werkzeughalter (2) mindestens eine nur zur Stirnseite und Innenseite hin offene Aussparung (8) für den Schneidkörper (9) vorgesehen und die Querschnittsformen der Aussparung und des Schneidkörpers (9) sind aneinander angepaßt. Bei Anordnung von zwei oder mehr Schneidkörpern (9) sind zusätzlich die Maße der Schneidkörper (9) untereinander gleich.

FIG 1

EP 0 327 818 A1

## Fräs- und Senkvorrichtung

Die Erfindung bezieht sich auf eine Fräs- und Senkvorrichtung, die zum Bearbeiten von zylindrischen Öffnungen, insbesondere von Rohrbodenbohrungen und Rohrenden, im Kessel- und Behälterbau anwendbar ist.

Zur Bearbeitung von Rohrenden hat man sich schon einer Fräsvorrichtung bedient, bei der ein Spanndorn in das Rohrende eingeführt und durch Ausspreizen von Konussegmenten fixiert wird. Bei dieser Ausführung sind an der zylindrischen Außenseite des Fräskopfes axiale Schlitze vorgesehen, in welche als Schneidmesser ausgebildete Schneidkörper eingesetzt werden können. Die Schneidmesser werden durch Klemmsegmente gehalten. Hierbei ist es erforderlich, die Schneidmesser für sich zu justieren und sie zusätzlich untereinander auf gleiche Schneidtiefe abzustimmen.

Der Erfindung liegt die Aufgabe zugrunde, eine Fräs- und Senkvorrichtung derart auszubilden, daß unterschiedliche Senkformen erzielt werden können, ohne daß es erforderlich ist, die unterschiedlichen Schneidkörper nach dem Einsetzen jeweils zu justieren und bei Anordnung mehrerer Schneidkörper im Werkzeughalter diese untereinander auf gleiche Schneidtiefe abzustimmen.

Diese Aufgabe wird erfindungsgemäß gelöst durch eine Fräs- und Senkvorrichtung zum Bearbeiten von zylindrischen Öffnungen, insbesondere von Rohrbodenbohrungen und Rohrenden, mit folgenden Merkmalen:

a) an einem Spindelkopf ist ein Werkzeughalter angeordnet,

b) in einer zentralen Öffnung des Spindelkopfes ist ein Spanndorn gelagert und durch eine zentrale Öffnung des Werkzeughalters geführt,

c) im Werkzeughalter ist mindestens eine nur zur Stirnseite und Innenseite hin offene Aussparung zum Einsetzen eines Schneidkörpers vorgesehen und

d) die Querschnittsformen der Aussparung und des Schneidkörpers sind aneinander angepaßt und bei Anordnung von zwei oder mehr Schneidkörpern sind zusätzlich die Maße der Schneidkörper untereinander gleich.

Auf diese Weise kann die Präzision einer herzustellenden Senkung durch den Schneidkörper vorgegeben werden, so daß bei der Montage des Schneidkörpers mühsame Justierarbeiten entfallen und die Montagezeit erheblich verkürzt werden kann.

Es ist günstig, den Spanndorn im Bereich der Aussparung mit einer Verjüngung zu versehen und die Aussparung sowie den in diese eingesetzten Schneidkörper derart auszubilden, daß der Schneidkörper in die Verjüngung des Spanndornes hineinragt. Dadurch ist es möglich, an den Enden von Rohren bzw. im Bereich zylindrischer Öffnungen eine einfache zylindrische oder mehrstufige Senkung einzuarbeiten, ohne daß die Gefahr besteht, daß der Schneidkörper bricht. Mit der bekannten Ausführung ist eine derartige Senkung nur bedingt ausführbar, weil das oder die Schneidmesser lang und dünn ausgebildet werden müßten.

Die Erfindung wird anhand zweier schematischer Ausführungsbeispiele näher erläutert. Es zeigen:

FIG 1 eine Fräsvorrichtung für eine zylindrische Öffnung in einer Platte,

FIG 2 einen Schnitt durch den Werkzeughalter der Fräsvorrichtung gemäß FIG 1,

FIG 3 eine Draufsicht auf den Werkzeughalter gemäß FIG 2,

FIG 4 eine Senkvorrichtung zum Einfräsen einer mehrstufigen Senkung in ein Rohrende, das in einen Rohrboden eines Wärmetauschers mündet,

FIG 5 einen Schnitt durch den Werkzeughalter mit Schneidkörper gemäß FIG 4 und

FIG 6 eine Draufsicht auf FIG 5.

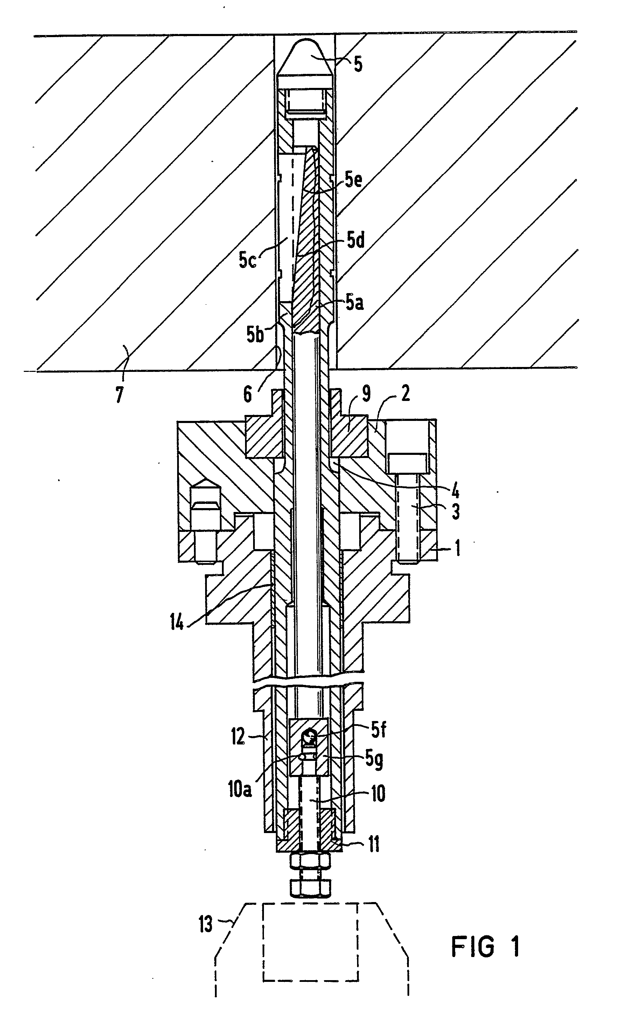

Die in FIG 1 dargestellte Fräsvorrichtung zum Bearbeiten einer zylindrischen Öffnung 6 in einer Platte 7 besteht aus einem Spindelkopf 1 und einem zylinderförmigen Werkzeughalter 2, der mit Schrauben 3 am Spindelkopf 1 befestigt ist. In einer zentralen Öffnung 4 im Spindelkopf 1 ist ein Spanndorn 5 gelagert, der durch eine zentrale Öffnung im Werkzeughalter 2 geführt ist. Der Spanndorn 5 besteht aus einem Spannbolzen 5a und einer Spannhülse 5b. Der Spannbolzen 5a bildet an seinem einen Ende mit der Spannhülse 5b und den ausstellbaren Keilen 5c einen in der zylindrischen Öffnung fixierbaren Spannfinger. In der Spannhülse 5b und im Spannbolzen 5a sind ausstellbare Keile 5c angeordnet. Sie sind in Nuten 5d des Spannbolzens 5a geführt, die eine an den Keil angepaßte Grundfläche 5e haben und ragen durch Schlitze in der Spannhülse 5b hindurch. Der Spannbolzen 5a ist an dem dem Spannfinger 5 entgegengesetzten Ende über ein Lager 5g mit einer Kugel 5f an einer Schraube 10 abgestützt. Die Schraube 10 ist in einer an der Hülse 5b befestigten Gewindebuchse 11 angeordnet und durch einen Sicherungsstift 10a an dem Spannbolzen 5a gehalten. Auf diese Weise kann durch Drehen der Schraube 10 der Spannbolzen 5a gegenüber der Hülse 5b in Längsrichtung verschoben werden, so daß die Keile 5c nach außen gegen die zylindrische Wandfläche gedrückt werden und der Spanndorn 5 in der zylindrischen Bohrung fixiert wird. Durch Zurückdrehen der Schraube werden die Keile 5c gelöst.

Der Spindelkopf 1 hat ein Ansatzstück 12 für einen Antriebsmotor 18, insbesondere für das Spannfutter 13 einer Antriebsmaschine (z.B. einer elektrischen Handbohrmaschine), welche in einfacher Weise als Antrieb für den Spindelkopf 1 dient, der an der Spannhülse 5b über eine oder mehrere Lagerbuchsen 14 drehbeweglich gelagert und geführt ist.

Zum Bearbeiten der zylindrischen Öffnung 6 in der Platte 7 wird der Spannfinger in die Öffnung 6 eingeführt und nur soweit verspannt, daß bei einer Fixierung der Fräsvorrichtung gerade noch ein Verschieben des Spanndornes 5 möglich ist.

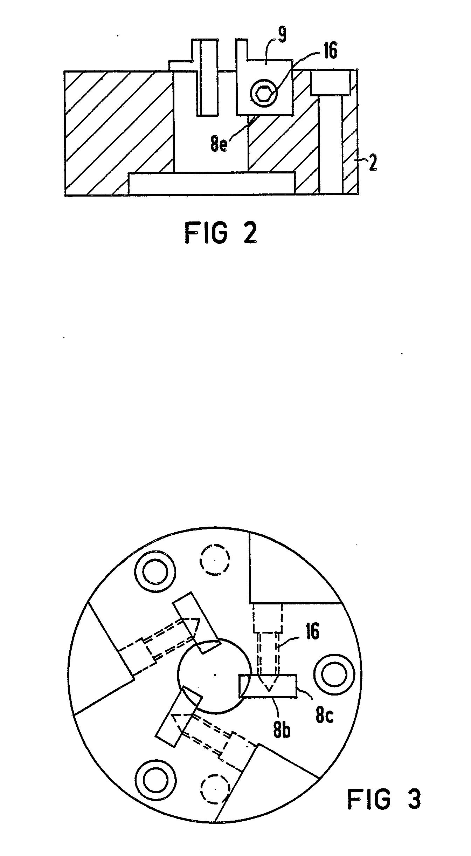

Im Werkzeughalter 2 sind drei nur zur Stirnseite und zur Innenseite hin offene Aussparungen 8 zum Einsetzen von Schneidkörpern 9 vorgesehen (siehe auch FIG 2 und 3). Dabei sind die Querschnittsformen der Aussparung 8 und des Schneidkörpers 9 aneinander angepaßt, wobei darüber hinaus die Maße der Schneidkörper 9 untereinander gleich sind. Die Grundfläche 8e der nach Art eines Polyeders geformten Aussparung 8 und zwei angrenzende Seitenflächen 8b, 8c dienen als Anschlag für den ebenfalls nach Art eines Polyeders mit rechteckförmiger Grundfläche ausgebildeten Schneidkörper.

Wie FIG 3 zeigt, ist der Schniedkörper 9 mittels einer Spannschraube 16 gegen die Seitenflächen 8b, 8c der Aussparung 8 verspannbar.

Wird eine an das Ansatzstück 12 gekuppelte Antriebsmaschine eingeschaltet, so führt der Spindelkopf 1 und der Werkzeughalter 2 mit dem Schneidkörper 9 eine Drehbewegung um den in der zylindrischen Öffnung 6 ruhenden Spanndorn 5 aus. Wird auf die Antriebsmaschine eine Längskraft ausgeübt, so kann der in der Öffnung 6 nur fixierte Spanndorn 5 verschoben und damit eine Vorschubbewegung für die Schneidkörper 9 erzeugt und eine Senkung in der Öffnung 6 der Platte 7 geschaffen werden.

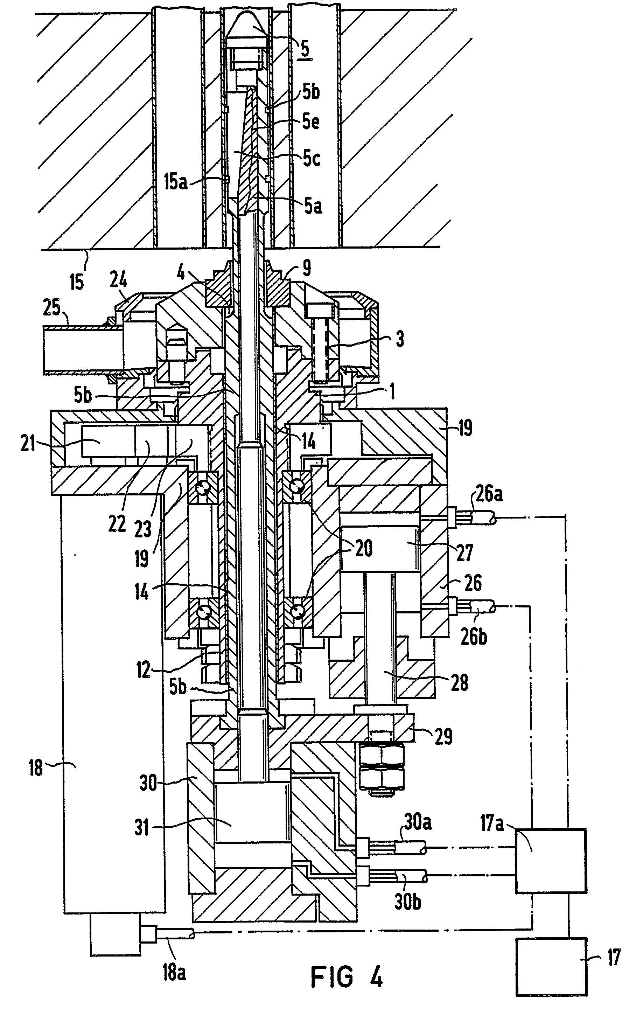

Die FIG 4 zeigt eine Fräs- und Senkvorrichtung zum Bearbeiten des Endes eines Rohres 15a, das in einem Rohrboden 15 eines Dampferzeugers eingesetzt ist. Die Drehbewegung des Schneidkörpers 9 und sein Vorschub werden durch je einen Druckmittelantrieb erzeugt. Der Spindelkopf 1 ist mit dem Werkzeughalter 2 und dem Schneidkörper 9 über Lagerbuchsen 14 längsverschieblich an der Hülse 5b des Spanndorns 5 gelagert. Der Werkzeughalter 2 hat abgeschrägte Stirnflächen.

Der Spanndorn 5 ist in einer zentralen Öffnung im Spindelkopf 1 über Lagerbuchsen 14 geführt. In der Spannhülse 5b und im Spannbolzen 5a sind ausstellbare Keile 5c angeordnet, die in Nuten 5d mit an den Keil angepaßter Grundfläche 5e geführt sind und durch Schlitze in der Spannhülse 5b hindurchragen. An dem entgegengesetzten Ende des Spannfingers 5 ist an der Spannhülse 5b eine Grundplatte 29 angeordnet, an der ein Zylinder 30 befestigt ist. Zu diesem Zylinder 30 führen Druckmittelleitungen 30a, 30b, welche über eine Steuereinrichtung 17a mit einem Druckspeicher 17 verbunden sind. Der in dem Zylinder 30 angeordnete Kolben 31 ist mit dem Spannbolzen 5a unmittelbar verbunden. Wird dem Zylinder 30 über die Druckmittelleitung 30b Hydraulikflüssigkeit zugeführt, so wird der Spannbolzen 5a in Längsrichtung bewegt und die Keile 5c werden nach außen gegen die Innenfläche des Rohres 15a gedrückt. Dabei werden so hohe Spannkräfte ausgeübt, daß die Fräs- und Senkvorrichtung über den Spanndorn 5 im Rohrboden 15 verankert wird.

Zum Erzeugen der Drehbewegung des Spindelkopfes 1 dient ein von einem Druckspeicher 17 gespeister Antriebsmotor 18, der als Pneumatikmotor oder Hydraulikmotor in an sich bekannter Ausführung ausgebildet ist. Dieser Antriebsmotor 18 ist an einem Gehäuse 19 der Fräs- und Senkvorrichtung befestigt, in welchem der Spindelkopf 1 mittels seines rohrförmigen Ansatzes 12 über Wälzlager 20 gelagert ist. Die Welle des Antriebsmotors 18 ist innerhalb des Gehäuses 19 mit einem Ritzel 21 versehen, das in ein Zahnrad 22 eingreift, welches drehmomentschlüssig mit einem an dem Spindelkopf 1 befestigten Zahnkranz 23 verbunden ist. Der Werkzeughalter 2 ist von einem am Gehäuse 19 angeordneten Spänesammelkorb 24 umgeben, an dem ein Stutzen 25 zum Abführen der Späne angeordnet ist.

Zur Erzielung einer Vorschubbewegung des Spindelkopfes 1 mit dem Werkzeughalter 2 und dem Schneidkörper 9 ist am Gehäuse 19 ein durch ein Druckmittel betätigter Zylinder 26 angeordnet, der über Leitungen 26a, 26b aus dem Druckspeicher 17 über eine Steuereinrichtung 17a gespeist wird. Der Zylinder 26 hat einen Kolben 27, dessen Kolbenstange 28 mit einer Platte 29 verbunden ist, welche an der Spannhülse 5b des Spanndorns 5 befestigt ist.

Wird die Leitung 26a mit Druckmittel beaufschlagt, so wird der Zylinder 26 und das mit ihm verbundene Gehäuse 19 und damit das in ihm gelagerte Ansatzstück 12 mit dem Spindelkopf 1 auf dem Spanndorn 5 in Längsrichtung verschoben, so daß die Schneidkörper 9 an das zu bearbeitende Rohrende herangeführt werden.

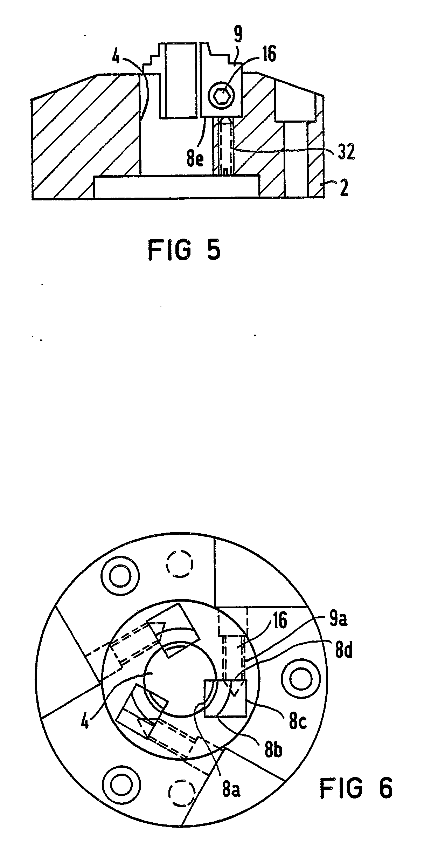

In FIG 5 und 6 ist der Werkzeughalter 2 dargestellt, der mit Aussparungen zum Einsetzen von Schneidkörpern 9 mit quadratischer Grundfläche versehen ist. Die Aussparungen werden jeweils durch eine quadratische Grundfläche 8e und vier Seitenflächen 8a bis 8d begrenzt, wobei die Seitenflächen 8a und 8d durch die Zylinderebene der zentralen Öffnung aufgeschnitten sind. Die Schneidkörper 9 ragen daher in die zentrale Öffnung 4. Sie sind mittels Spannschrauben 16 gegen die Seitenflächen 8b und 8c verspannt. Damit die Bodenfläche 8e der Aussparung nicht genau gefertigt zu werden braucht, ist es günstig, eine einmalige Justierung der Höhe der Schneidkörper durch eine Justierschraube 32 vorzunehmen. Die Schneidkörper 9 weisen mehrstufige Schneiden auf, wobei die erste Senkstufe eine Abschrägung hat.

**Ansprüche**

1. Fräs- und Senkvorrichtung zum Bearbeiten von zylindrischen Öffnungen, insbesondere von Rohrbodenbohrungen und Rohrenden, mit folgenbden Merkmalen:

a) an einem Spindelkopf (1) ist ein Werkzeughalter (2) angeordnet,

b) in einer zentralen Öffnung (4) des Spindelkopfes (1) ist ein Spanndorn (5) gelagert und durch eine zentrale Öffnung des Werkzeughalters (2) geführt,

c) im Werkzeughalter (2) ist mindestens eine nur zur Stirnseite und Innenseite hin offene Aussparung (8) zum Einsetzen eines Schneidkörpers (9) vorgesehen und

d) die Querschnittsformen der Aussparung und des Schneidkörpers (9) sind aneinander angepaßt und bei Anordnung von zwei oder mehr Schneidkörpern (9) sind zusätzlich die Maße der Schneidkörper (9) untereinander gleich.

2. Fräs- und Senkvorrichtung nach Anspruch 1, bei der der Spanndorn (5) im Bereich der Aussparung (8) eine Verjüngung aufweist und die Aussparung (8) sowie der in diese eingesetzte Schneidkörper (9) derart ausgebildet sind, daß der Schneidkörper (9) in die Verjüngung des Spanndornes (5) hineinragt.

3. Fräs- und Senkvorrichtung nach Anspruch 1, bei der der Schneidkörper (9) mittels einer Spannschraube gegen zwei Seitenflächen der Aussparung 8 verspannbar ist.

4. Fräs- und Senkvorrichtung nach einem der vorhergehenden Ansprüche, bei der die Höhe des Schneidkörpers (9) durch eine Justierschraube (32) einstellbar ist.

5. Fräs- und Senkvorrichtung nach Anspruch 1, bei der der Spanndorn (5) aus einer Spannhülse (5b) und einem in dieser in Längsrichtung verschiebbaren Spannbolzen (5a) besteht, das Ende des Spanndornes (5) als in der zylindrischen Öffnung (6) fixierbarer Spannfinger ausgebildet ist und der Spindelkopf (1) ein Ansatzstück (12) für einen Antriebsmotor (18) hat.

6. Fräs- und Senkvorrichtung nach Anspruch 5, bei der der Antriebsmotor (18) mit dem Ansatzstück (12) drehmomentschlüssig verbunden ist (FIG 1).

7. Fräs- und Senkvorrichtung nach Anspruch 5, bei der der Spindelkopf (1) an der Spannhülse (5b) längsverschieblich gelagert ist, mit der Spannhülse (5b) ein Kolben (27) eines Druckmittelantriebes verbunden ist, dessen Zylinder (26) an dem drehbaren Ansatzstück (12) des Spindelkopfes (1) gelagert ist (FIG 4).

8. Fräs- und Senkvorrichtung nach Anspruch 5, bei der der Antriebsmotor (18) an dem drehbaren Ansatzstück (12) des Spindelkopfes (1) gelagert ist und über ein Getriebe (21, 22) mit einem Zahnkranz (23) des Spindelkopfes (1) verbunden ist.

9. Fräs- und Senkvorrichtung nach Anspruch 5, bei der mit dem Spannbolzen (5a) ein Kolben (31) eines Druckmittelantriebs verbunden ist, dessen Zylinder (30) an der Spannhülse (5b) angeordnet ist.

10. Fräs- und Senkvorrichtung nach einem der vorhergehenden Ansprüche, bei der der Werkzeughalter (2) von einem Spänesammelkorb (24) umgeben ist.

88 P 3013 E

FIG 1

88 P 3013 E

FIG 2

FIG 3

88 P 3013 E

FIG 4

FIG 5

FIG 6

# EUROPÄISCHER RECHERCHENBERICHT

**Europäisches Patentamt**

Nummer der Anmeldung

EP 89 10 0425

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 201 838 (TRI TOOL) <br> * Seite 3, Zeilen 24-36; Seite 4; Seite 5, Zeilen 1-17; Figuren 1-4 * <br> --- | 1,2,4,5 ,8 | B 23 B 5/16 |
| A | US-A-1 719 599 (DICKSON) <br> --- | 1,2,5,6 | |
| A | US-A-3 086 783 (KELSO) <br> --- | 9 | |
| A | DE-A-1 948 940 (BARTOLDUS) <br> --- | 10 | |
| A | GB-A-2 092 934 (TUBE RUNNER) <br> --- | | |
| A | GB-A- 946 499 (REEKIE) <br> --- | | |
| A | FR-A-2 544 237 (EMILIAN) <br> ----- | | |

**RECHERCHIERTE SACHGEBIETE (Int. Cl.4)**

B 23 B 5/00
B 23 B 31/00
B 23 Q 11/00

Der vorliegende Recherchenbericht wurde für alle Patentansprüche erstellt

| Recherchenort | Abschlußdatum der Recherche | Prüfer |
|---|---|---|
| DEN HAAG | 24-04-1989 | BOGAERT F.L. |